# DEMANDE DE BREVET EUROPEEN

(11) **EP 4 542 693 A1**
(43) Date de publication de la demande: **23.04.2025**
(21) Numéro de dépôt: 24200366.3
(22) Date de dépôt: 13.09.2024
(51) Int. Cl.: H01M 8/04858, H01M 16/00, B60L 58/40, H02M 3/156, H02M 3/158

(54) **SYSTÈME DE PILE À COMBUSTIBLE**

(30) Priorité: 15.09.2023 FR 2309739
(71) Demandeur: Ampere SAS, 92100 Boulogne-Billancourt (FR)
(72) Inventeur: GERARD, David, 78084 GUYANCOURT (FR); LEPAISANT, Philippe, 78084 GUYANCOURT (FR); LOUDOT, Serge, 78084 GUYANCOURT (FR); MARCHAND, Marielle, 78084 GUYANCOURT (FR)
(74) Mandataire: Renault Group

(57) **Abrégé**

Ce système (1) de pile à combustible (2) muni d'un premier circuit (3) d'alimentation en air, d'un deuxième circuit (4) d'alimentation en dihydrogène, d'un troisième circuit (5) de refroidissement et d'un quatrième circuit (6) électrique restituant une charge électrique produite, comprend au moins deux empilements (7) de cellules élémentaires fonctionnant à très basse tension, lesdits empilements étant identiques et montés en parallèle, ledit système comprenant une diode (8) montée en série avec chaque empilement (7) de manière à interdire tout courant inverse dans les empilements (7).

## Description

### Domaine technique

La présente invention concerne un système de pile à combustible destiné à intégrer une chaîne de traction ou de propulsion d'un véhicule.

### Techniques antérieures

On connaît des systèmes de traction ou de propulsion de véhicule qui comportent une pile à combustible associée à une machine électrique. Dans ces systèmes, la pile à combustible et la machine électrique génèrent la puissance électrique nécessaire à l'avancement du véhicule. Plus précisément, on peut utiliser les deux sources d'énergie ensemble ou séparément, voire utiliser la machine électrique pour stocker de l'énergie produite par la pile à combustible.

Dans de telles architectures, la possibilité de disposer d'un système de pile à combustible fonctionnant à une tension maximale limitée, par exemple 48V, permettrait de simplifier la sécurité électrique en restant dans un domaine de très basse tension, c'est-à-dire inférieur à 120 V, et de le rendre compatible avec des chaînes de traction ou de propulsion, des batteries ou des systèmes auxiliaires très répandus fonctionnant pour la plupart à 48V.

Cependant, imposer une tension maximale limitée, par exemple de 48V, signifie devoir utiliser des cellules élémentaires d'une surface importante afin de permettre la création par la pile à combustible d'un courant et d'une puissance suffisamment élevés.

Or, l'agrandissement de la surface d'une cellule n'est pas optimal ni d'un point de vue de tenue structurelle, ni par rapport à l'homogénéité souhaitée des conditions opératoires des fluides mis en oeuvre pour la génération de courant électrique. De plus, l'utilisation de cellules ayant une surface plus importante que celle des cellules standard peut se traduire par des disponibilités réduites et des coûts d'obtention plus élevés.

### Exposé de l'invention

L'invention a pour but de pallier au moins certains des inconvénients précités et de proposer un système de pile à combustible utilisant des cellules élémentaires standard et fonctionnant à une tension maximale limitée au domaine de la très basse tension, par exemple 48V.

L'invention a pour objet un système de pile à combustible muni d'un premier circuit d'alimentation en air, d'un deuxième circuit d'alimentation en dihydrogène, d'un troisième circuit de refroidissement et d'un quatrième circuit électrique restituant une charge électrique produite.

Le système comprend au moins deux empilements de cellules élémentaires fonctionnant à très basse tension, les empilements étant identiques et montés en parallèle. Le système comprend une diode montée en série avec chaque empilement de manière à interdire tout courant inverse dans les empilements.

De préférence, le système comprend au moins un dispositif d'équilibrage de tension et/ou du courant associé à chaque empilement de manière à réduire un déséquilibre entre les empilements.

Avantageusement, le premier circuit d'alimentation en air comprend un dispositif hydraulique d'équilibrage de la tension et/ou du courant associé à chaque empilement et/ou le quatrième circuit électrique comprend un dispositif électronique d'équilibrage de la tension et/ou du courant associé à chaque empilement.

De préférence, le système comprend une unité électronique de régulation configurée pour commander les dispositifs d'équilibrage à partir de consignes de débit hydraulique d'air entrant et de consignes de charge électrique sortante.

Avantageusement, le système comprend un convertisseur continu-continu de topologie zêta associé à chaque empilement pour l'équilibrage de tension et/ou de courant.

Par exemple, le système comprend un convertisseur élévateur de tension associé à chaque empilement pour l'équilibrage de tension et/ou de courant.

Par exemple, le système comprend un convertisseur élévateur - abaisseur de tension associé à chaque empilement pour l'équilibrage de tension et/ou de courant.

Selon une caractéristique avantageuse, le système comprend une vanne proportionnelle disposée en amont de chaque empilement et destinée à imposer un débit d'air entrant dans chaque empilement.

Selon un autre aspect, l'invention a pour objet un système de traction ou de propulsion d'un véhicule comprenant au moins une machine électrique pouvant fonctionner au moins selon un mode générateur et un système de pile à combustible tel que décrit ci-dessus.

Selon un autre aspect, l'invention a pour objet un véhicule comprenant un système de traction ou de propulsion tel que décrit ci-dessus.

### Brève description des dessins

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] illustre un système de pile à combustible selon l'invention;
[Fig 2] illustre un premier circuit d'alimentation en air du système de la [Fig 1];
[Fig 3] illustre un quatrième circuit électrique du système de la [Fig 1];
[Fig 4] illustre un autre mode de réalisation du quatrième circuit électrique;
[Fig 5] illustre un autre mode de réalisation du quatrième circuit électrique; et
[Fig 6] illustre un autre mode de réalisation du quatrième circuit électrique.

### Exposé détaillé d'au moins un mode de réalisation

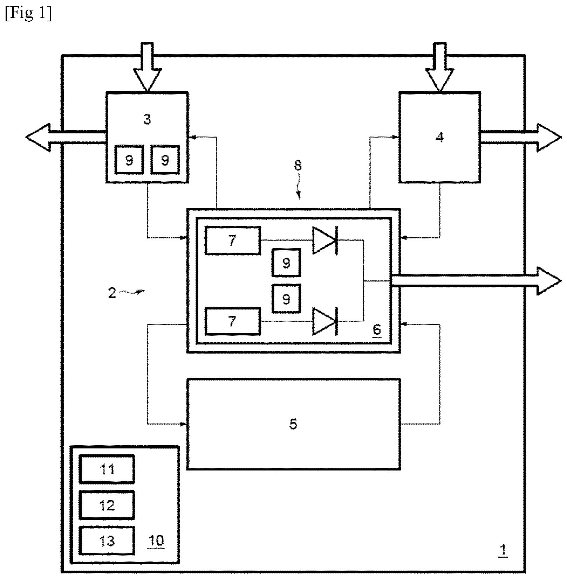

La figure 1 illustre un système 1 de pile à combustible 2 selon l'invention. Le système 1 de pile à combustible peut être intégré à une chaîne de traction ou de propulsion d'un véhicule. Cependant, le système de pile proposé peut être utilisé pour tout système stationnaire ou mobile qui comporte une source d'alimentation à pile à combustible fonctionnant à très basse tension. Par exemple, l'invention proposée peut trouver des applications dans le domaine des engins de manutention ou être utilisée comme source complémentaire à des panneaux solaires.

Le système 1 est muni d'un premier circuit 3 d'alimentation en air et d'un deuxième circuit 4 d'alimentation en dihydrogène, d'un troisième circuit 5 de refroidissement et d'un quatrième circuit 6 électrique restituant la charge électrique produite. Le système constitue ainsi un groupe électrogène.

Une cellule de pile à combustible est constituée de deux électrodes (anode et cathode) formées d'une zone réactionnelle et d'une couche de diffusion, séparées par un électrolyte. La différence de potentiel disponible aux bornes d'une telle cellule est faible, de l'ordre du volt. Pour atteindre des tensions utiles, des cellules sont empilées, c'est-à-dire placées en série électriquement. L'empilement ainsi réalisé est couramment désigné par le terme anglais « stack ».

Le système 1 comprend au moins deux empilements 7 de cellules élémentaires fonctionnant à très basse tension, par exemple une tension de 48V. Tous les empilements 7 sont identiques et montés en parallèle.

Les déséquilibres et les dispersions inévitables des courbes de polarisation entre les empilements 7 conduisent forcément à un déséquilibre des courants générés par les empilements 7.

Pour éviter tout endommagement pouvant résulter d'un déséquilibre important, le système 1 comprend une diode 8 montée en série avec chaque empilement 7 de manière à interdire tout courant inverse dans les empilements.

De préférence, le système 1 comprend au moins un dispositif 9 d'équilibrage de tension et/ou de courant associé à chaque empilement 7 de manière à réduire un déséquilibre entre les empilements. En variante, il est possible que le système 1 ne soit pas équipé de dispositif 9 d'équilibrage de tension et/ou de courant.

Dans le mode de réalisation illustré en figure 1, le premier circuit 3 d'alimentation en air comprend un dispositif 9 hydraulique d'équilibrage de la tension et/ou du courant associé à chaque empilement et le quatrième circuit 6 électrique comprend un dispositif 9 électronique d'équilibrage de la tension et/ou du courant associé à chaque empilement.

En variante, il est possible que les dispositifs d'équilibrage 9 soient prévus uniquement sur le premier circuit 3 d'alimentation en air. Dans cette variante, les dispositifs d'équilibrage 9 sont hydrauliques.

Selon une autre variante, il est possible que les dispositifs d'équilibrage 9 soient prévus uniquement sur le quatrième circuit 6 électrique. Dans cette variante, les dispositifs d'équilibrage 9 sont électroniques.

Le système 1 comprend également une unité électronique de régulation 10 qui comprend un module de mesure 11, un module de calcul 12 et un module de commande 13. L'unité électronique de régulation 10 assure à la fois la régulation des flux hydrauliques qui alimentent chaque empilement 7 et la régulation de la charge électrique sortante de chaque empilement 7.

Le module 12 de calcul est configuré pour calculer des consignes de débit hydraulique d'air entrant et des consignes de charge électrique sortante en fonction de paramètres du système 1 mesurés par le module de mesure 11. Le module de commande 13 est apte à commander les dispositifs 9 d'équilibrage à partir des consignes issues du module de calcul 12.

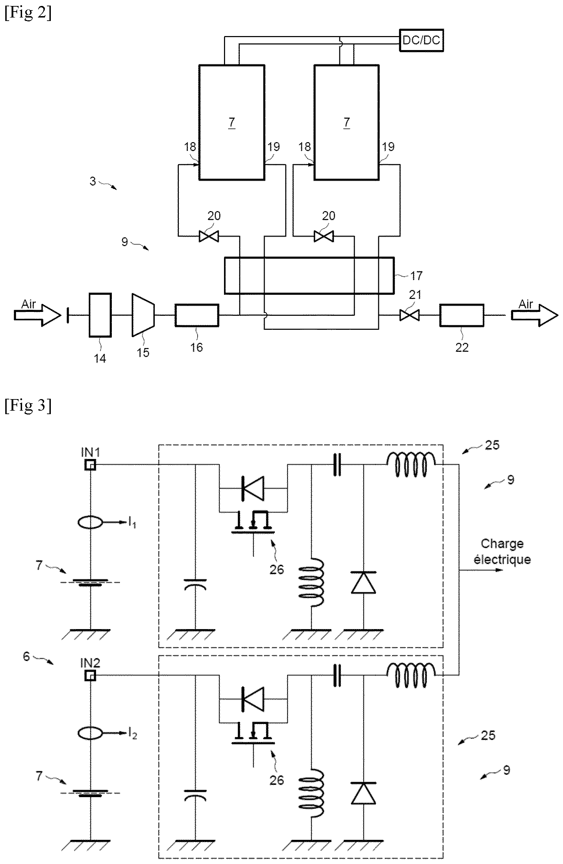

La figure 2 illustre le premier circuit 3 d'alimentation en air du système de la figure 1. Sur les figures, les mêmes éléments portent les mêmes références.

Le premier circuit 3 d'alimentation comporte un filtre 14, un compresseur 15, une unité de refroidissement 16 et une unité d'humidification 17. Chaque empilement 7 est connecté au premier circuit 3 d'alimentation en air par une entrée 18 et une sortie 19 qui permettent respectivement l'entrée et la sortie d'air.

Le premier circuit 3 d'alimentation en air est muni de dispositifs 9 d'équilibrage de la tension et/ou de courant. Ces dispositifs 9 sont disposés en amont de l'entrée 18 de chaque empilement 7 et comprennent chacun une vanne 20 proportionnelle destinée à imposer un débit d'air entrant dans chaque empilement 7. Le pilotage du débit d'air entrant est réalisé en fonction des consignes issues de l'unité électronique de régulation.

Le premier circuit 3 comprend en outre une vanne de sortie 21 et un silencieux 22 disposés tous les deux en aval des sorties 19 des empilements 7.

La figure 3 illustre le quatrième circuit 6 électrique du système de la figure 1. Le quatrième circuit 6 électrique comprend un dispositif 9 électronique d'équilibrage de tension et/ou du courant associé à chaque empilement 7.

De préférence, chaque dispositif 9 électronique d'équilibrage comprend un convertisseur 25 continu-continu de topologie zêta, tel qu'illustré en figure 3. La configuration d'un tel convertisseur 25 de topologie zêta est connue et n'est pas plus détaillée ici. Avec une telle architecture, il est possible de piloter indépendamment la charge électrique de chaque empilement 7.

Ainsi, parallèlement à la régulation hydraulique de chaque empilement 7, le pilotage de chaque convertisseur 25 zêta permet la régulation de la charge en courant de chaque empilement 7. Une telle régulation électronique a pour avantage d'anticiper la dynamique plus lente de la régulation hydraulique.

En mode courant continu, chaque convertisseur 25 zêta, permet de réguler la tension de sortie de l'empilement 7 associé via le rapport cyclique appliqué à la commutation d'un transistor 26. Il est à noter que le transistor 26 doit supporter une tension au moins égale à la somme de la tension de l'empilement 7 associé et de celle du réseau de bord qu'il alimente. Ainsi, cette topologie est particulièrement pertinente pour un réseau de bord et des empilements à très basse tension, typiquement 48V.

La consigne de charge électrique de chaque empilement 7 est issue de l'unité électronique de régulation 10 qui gère également les flux hydrauliques qui alimentent chaque empilement 7 tel que déjà indiqué précédemment.

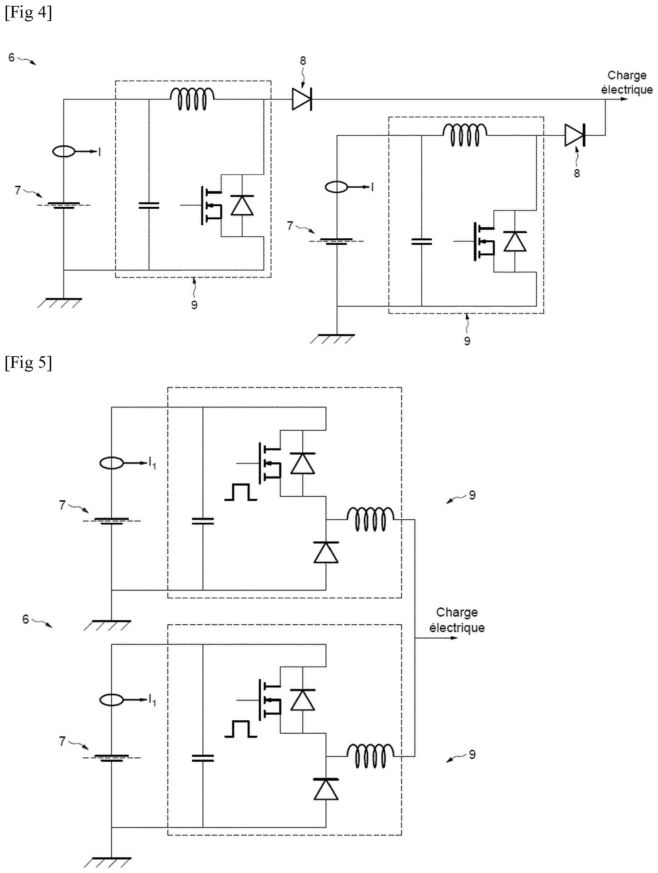

Selon un mode de réalisation illustré en figure 4, chaque dispositif 9 électronique d'équilibrage comprend un convertisseur élévateur de tension, couramment désigné par le terme anglais « boost ». La configuration d'un tel convertisseur élévateur de tension est connue et n'est pas plus détaillée ici. Avec une telle architecture, il est possible d'équilibrer les charges en courant de chaque empilement 7 ou d'équilibrer les puissances délivrées par chaque empilement 7. Ainsi, la puissance fournie par l'empilement qui a la courbe de polarisation la plus basse est augmentée jusqu'à une limite d'environ 0,5V par cellule.

Selon un mode de réalisation illustré en figure 5, chaque dispositif 9 électronique d'équilibrage comprend un convertisseur abaisseur de tension, couramment désigné par le terme anglais « buck ». La configuration d'un tel convertisseur abaisseur de tension est connue et n'est pas plus détaillée ici. Avec une telle architecture, la tension délivrée à la charge électrique ne peut être qu'inférieure à la tension de l'empilement ayant la tension la plus faible.

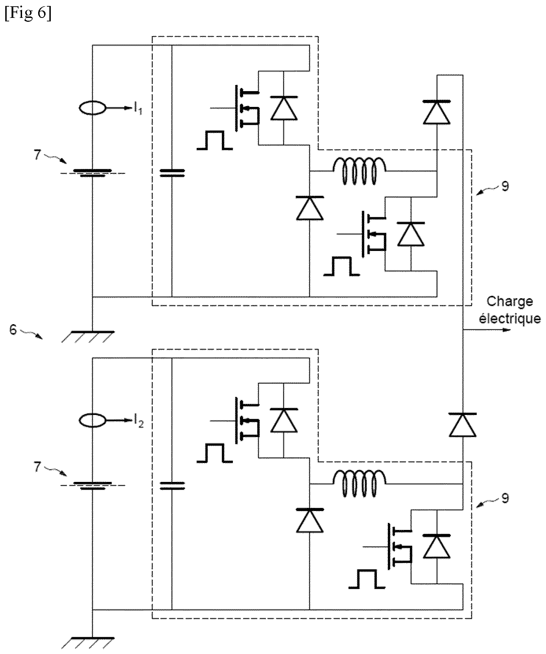

Selon un mode de réalisation illustré en figure 6, chaque dispositif 9 électronique d'équilibrage comprend un convertisseur élévateur - abaisseur de tension, couramment désigné par le terme anglais « buck - boost ». La configuration d'un tel convertisseur élévateur - abaisseur est connue et n'est pas plus détaillée ici. Avec une telle architecture, il est possible de piloter le courant de chaque empilement quelle que soit sa tension.

## Revendications

1. Système (1) de pile à combustible (2) muni d'un premier circuit (3) d'alimentation en air, d'un deuxième circuit (4) d'alimentation en dihydrogène, d'un troisième circuit (5) de refroidissement et d'un quatrième circuit (6) électrique restituant une charge électrique produite, ledit système étant **caractérisé en ce qu'**il comprend au moins deux empilements (7) de cellules élémentaires fonctionnant à très basse tension, lesdits empilements étant identiques et montés en parallèle, ledit système comprenant une diode (8) montée en série avec chaque empilement (7) de manière à interdire tout courant inverse dans les empilements (7).

2. Système selon la revendication 1, comprenant au moins un dispositif (9) d'équilibrage de tension et/ou du courant associé à chaque empilement de manière à réduire un déséquilibre entre les empilements.

3. Système de pile à combustible selon la revendication 1 ou 2, dans lequel le premier circuit (3) d'alimentation en air comprend un dispositif (9) hydraulique d'équilibrage de la tension et/ou du courant associé à chaque empilement et/ou le quatrième circuit (6) électrique comprend un dispositif (9) électronique d'équilibrage de la tension et/ou du courant associé à chaque empilement.

4. Système de pile à combustible selon la revendication 2 ou 3, comprenant une unité électronique de régulation (10) configurée pour commander lesdits dispositifs (9) d'équilibrage à partir de consignes de débit hydraulique d'air entrant et de consignes de charge électrique sortante.

5. Système de pile à combustible selon l'une quelconque des revendications 2 à 4, comprenant un convertisseur continu-continu de topologie zêta associé à chaque empilement pour l'équilibrage de tension et/ou de courant.

6. Système de pile à combustible selon l'une quelconque des revendications 2 à 4, comprenant un convertisseur élévateur de tension associé à chaque empilement pour l'équilibrage de tension et/ou de courant.

7. Système de pile à combustible selon l'une quelconque des revendications 2 à 4, comprenant un convertisseur élévateur - abaisseur de tension associé à chaque empilement pour l'équilibrage de tension et/ou de courant.

8. Système de pile à combustible selon l'une quelconque des revendications 2 à 7, comprenant une vanne (20) proportionnelle disposée en amont de chaque empilement et destinée à imposer un débit d'air entrant dans chaque empilement (7).

9. Système de traction ou de propulsion d'un véhicule, comprenant au moins une machine électrique pouvant fonctionner au moins selon un mode générateur et un système (1) de pile à combustible selon l'une quelconque des revendications 1 à 8.

10. Véhicule comprenant un système de traction ou de propulsion selon la revendication 9.
